# EUROPÄISCHE PATENTSCHRIFT

(11) **EP 0 597 948 B1**
(45) Veröffentlichungstag und Bekanntmachung des Hinweises auf die Patenterteilung: **28.02.1996**
(21) Anmeldenummer: 92916610.6
(22) Anmeldetag: 29.07.1992
(51) Int. Cl.: C08F 8/30, C08F 8/46

(54) **POLYACRYLATE UND DEREN VERWENDUNG ALS VERLAUFMITTEL FÜR DIE PULVERBESCHICHTUNG**
POLYACRYLATES AND THEIR USE AS LEVELLING AGENTS FOR POWDER COATINGS
POLYACRYLATES ET LEUR UTILISATION COMME PRODUITS NIVELANTS DANS DES REVETEMENTS PAR POUDRES

(30) Priorität: 07.08.1991 DE 4126076
(43) Veröffentlichungstag der Anmeldung: 25.05.1994
(73) Patentinhaber: Henkel Kommanditgesellschaft auf Aktien, D-40191 Düsseldorf (DE)
(72) Erfinder: FISCHER, Herbert, D-4000 Düsseldorf 1 (DE); GRESS, Wolfgang, D-4600 Wuppertal-Elberfeld (DE); OBERKOBUSCH, Doris, D-4000 Düsseldorf 13 (DE)
(86) Internationale Anmeldenummer: EP9201723
(87) Internationale Veröffentlichungsnummer: WO9303069

(56) Entgegenhaltungen:
- EP-A- 0 314 042
- EP-A- 0 355 676
- EP-A- 0 379 942
- EP-A- 0 386 507
- US-A- 3 277 030

## Beschreibung

Die Erfindung betrifft Polyacrylate und deren Verwendung als Verlaufmittel für die Pulverbeschichtung, insbesondere für Pulverlakke.

Lösungsmittelarme bzw. lösungsmittelfreie Beschichtungssysteme gewinnen zunehmend an Bedeutung. Zu der Gruppe dieser Beschichtungssysteme gehört die Pulverbeschichtung, also die Beschichtung von Metallen und Kunststoffen durch Auftrag und Sinterung von wärmehärtenden Pulvern. Sie können im Rotations-, im Pulverspritz-, im Wirbelsinterbad-Verfahren und vor allem durch elektrostatische Beschichtung aufgetragen werden. Zur elektrostatischen Pulverbeschichtung eignen sich besonders duroplastische Pulverlacke aus Epoxid-, Polyester- und Acrylharzen. Beim Wirbelsintern werden Thermoplasten aus Polyamid, Polyester, Polyethylen, Polyethylenvinylacetat, Polyvinylchlorid und Polyepoxiden bevorzugt eingesetzt. Die Pulverbeschichtung wird vor allem bei Maschinenteilen und Haushaltsgeräten (z.B. Stahlmöbel) angewendet.

Um das Verlaufen der Kunststoffpulver beim Sintern zu fördern, werden ihm Verlaufmittel zugesetzt, so daß beim Auftragen entstehende Unebenheiten wie Streifen, Blasen, Krater, Orangenschalen-Strukturen und Nadelstiche weitgehend ausgeglichen werden. Als Verlaufmittel sind u.a. Acrylatcopolymere bekannt. Dabei handelt es sich im allgemeinen um flüssige Produkte auf Polyacrylatbasis, die grundsätzlich auf zwei verschiedene Arten in die Pulverlacke eingearbeitet werden können:
1. Man stellt einen sogenannten "Master-Batch" her, wobei das flüssige Verlaufmittel in die Bindemittelkomponente des Pulverlackes eingeschmolzen wird. Die erstarrte Schmelze wird anschließend gebrochen und für die weitere Verarbeitung konfektioniert.
2. Es wird ein inerter Träger für die flüssigen Produkte verwendet, z.B. Kieselgel.
Nachteil der Master-Batch-Technologie ist, daß man in der Formulierung von Pulverlacken eingeschränkt ist, da das Bindemittel des Master-Batch mit dem Hauptbindemittel der Formulierung identisch oder mindestens verträglich sein muß. Auf einen Träger aufgezogene Verlaufmittel können zu einer Glanzverminderung des Lackes und zu einer Beeinträchtigung der Transparenz bei Klarlacken sowie unter ungünstigen Umständen zu einer Herabsetzung der Lagerstabilität des Pulverlackes führen.
Um diese Nachteile zu beseitigen, wurden pulverförmige Verlaufmittel entwickelt, insbesondere für die Klarlack-Herstellung, die weder einen inerten Träger noch ein Master-Batch-Verfahren erfordern. Ein derartiges Verlaufmittel ist in der EP 0 355 676 beschrieben. Es werden Copolymerisate von
a) langkettigen Alkylacrylaten der Formel CH₂=CR¹-C0-0R, in der
   R¹ ein Wasserstoffatom oder eine Methylgruppe und
   R der Rest eines Fettalkohols mit 16 bis 34 Kohlenstoffatomen ist und
b) N-haltigen Acrylat- bzw. Methacrylat-Funktionen enthaltenden Olefinen als Verlaufmittel für Pulverlacke beschrieben.
Sie werden durch Copolymerisation aus den entsprechenden Comonomeren hergestellt. 0,5 Gew.-% von diesem Copolymerisat verhindern die Bildung von "Fischaugen" und Kratern. Es werden also die gröbsten Unebenheiten vermieden. Eine einheitliche Oberfläche ohne Orangenschalen-Struktur wird dagegen noch nicht erreicht. Außerdem sind diese Copolymerisate oberhalb von 45 °C nicht rieselfähig, so daß es Probleme bei der Lagerung und Einarbeitung gibt.

Daraus ergab sich die Aufgabe, das bekannte pulverförmige Verlaufmittel bezüglich seiner Handhabung und seiner Funktion zu verbessern, insbesondere bezüglich der Rieselfähigkeit und der verlaufsverbessernden Eigenschaften.

Die erfindungsgemäße Lösung ist den Patentansprüchen zu entnehmen. Sie besteht im wesentlichen in der Kombination von mindestens drei unterschiedlichen Struktureinheiten sowie in der zweistufigen Herstellung durch Polymerisation und anschließende polymer-analoge Umsetzung.

Da bei der polymer-analogen Umesterung nur etwa 70 Mol-% der funktionellen Gruppen reagieren, entstehen Polyacrylate mit folgenden Struktureinheiten:

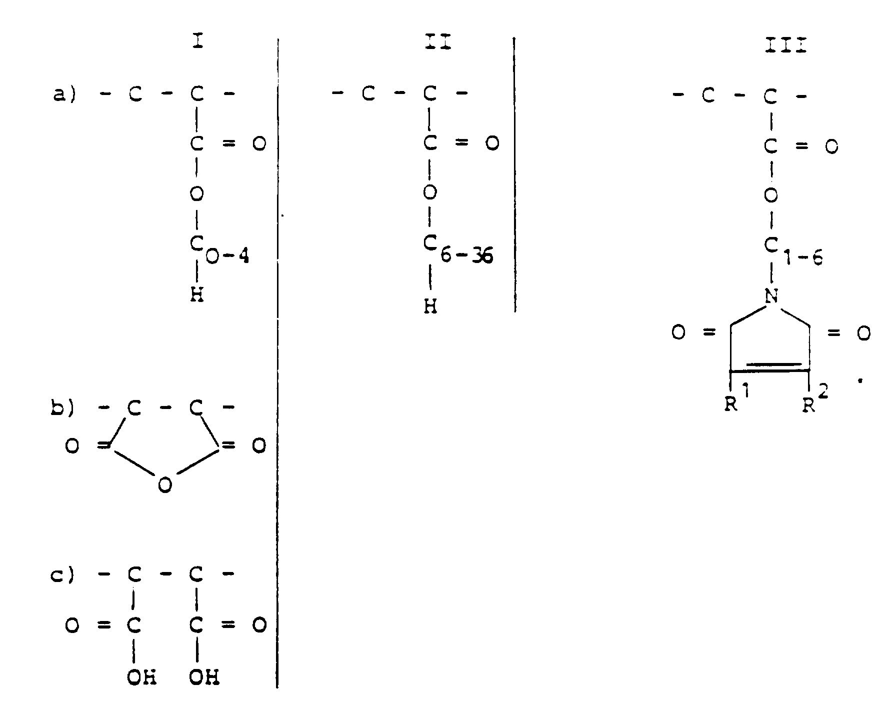

Die Struktureinheiten I, II und III sind obligatorisch. Die Strukturen I stammen von den ursprünglichen Polymerisaten aus der Acrylsäure bzw. ihren Estern und der Maleinsäure bzw. ihrem Anhydrid. Bei Einsatz der Methacrylsäure sowie der Fumarsäure entstehen entsprechende Struktureinheiten.

Die erfindungsgemäßen Polyacrylate haben ein mittleres Molekulargewicht: M_{w} liegt unter 150 000, vorzugsweise unter 100 000, Mₙ liegt unter 60 000, vorzugsweise unter 45 000. Sie wurden über GPC mit Polystyrol-Eichstandards bestimmt.

Ihre Schmelzbereiche beginnen ab ca. 40 °C, vorzugsweise bei 45 °C und darüber. Die Schmelzpunkte wurden auf der Koflerschen Heizbank bestimmt.

Am besten sind die erfindungsgemäßen Polyacrylate durch ihr Herstellungsverfahren charakterisierbar: Sie sind herstellbar durch
- Polymerisation von wenigstens einem der folgenden Monomeren: Acrylsäure, Methacrylsäure, Crotonsäure, Itaconsäure, Fumarsäure, Maleinsäure und deren Ester mit C₁- bis C₄-Alkoholen sowie dem Anhydrid der Maleinsäure,
- polymer-analoge Umsetzung des erhaltenen Polymerisats mit den Alkoholen a) und b),
   wobei der Alkohol a) ein aliphatischer geradkettiger oder verzweigter Alkohol mit 6 bis 36 C-Atomen oder ein Alkoholgemisch daraus ist, und
   wobei der Alkohol b) ein Alkohol mit einer Imidstruktur der folgenden allgemeinen Formel ist: 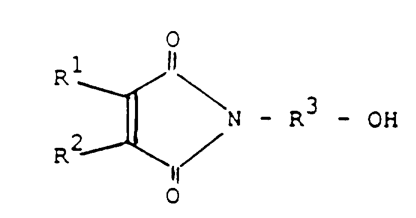
- in der R¹ und R unabhängig voneinander Wasserstoff oder eine Alkylgruppe mit 1 bis 4 C-Atomen bedeuten oder zusammen einen C₅- oder C₆-Ring bilden können.
- R³ für eine geradkettige oder verzweigte Alkylengruppe mit 1 bis 6 Kohlenstoffatomen oder für eine cyclische C₅-oder C₆-Alkylgruppe steht und
- die C-C-Doppelbindung hydriert sein kann, wobei nur etwa 70 Mol% der funktionellen Gruppen bei der polymeranalogen Umesterung reagieren.
Das Polyacrylat kann zweckmäßigerweise auch noch 0 bis 30, vorzugsweise 0 bis 10 Gew.-%, eines zusätzlichen Comonomeren enthalten. Bevorzugt sind Ethylen, Styrol oder Acrylnitril. Weitere mögliche Comonomeren sind Butadien, Vinylchlorid, Vinylidenchlorid, Vinylpyridin, N-Vinylpyrrolidon und Acrylamid.

Bevorzugte Bausteine für das Polyacrylat sind Maleinsäureanhydrid, Acrylsäure- und Methacrylsäure-Ester, insbesondere Acrylsäure-Methylester und -Ethylester.
Ganz besonders bevorzugt ist Methylacrylat in Kombination mit Behenylalkohol und Stickstoff-(2-hydroxyethyl-)phthalimid. Der aus dem Alkohol a) gebildete Ester mit der Struktureinheit II sollte im Endprodukt einen Gewichtsanteil von 15 bis 45 Gew.-% haben, vorzugsweise von 20 bis 40, insbesondere von 25 bis 35 Gew.-%. Besonders bevorzugt sind 10 bis 30, insbesondere 15 bis 25 Gew.-% an Struktureinheiten II aus Alkoholen mit ca. 22 C-Atomen. Bevorzugt werden die Alkohole a) mit Kettenlängen zwischen 16 und 24 C-Atomen.
In den bevorzugten Alkoholen b) bilden R¹ und R einen Ring, insbesondere einen aromatischen Ring, der mit C₁-C₄-Alkylgruppen substituiert sein kann. Der Gewichtsanteil der aus dem Alkohol b) gebildeten Struktureinheit im Endprodukt beträgt im allgemeinen 30 bis 70 Gew.-%, vorzugsweise 40 bis 65, insbesondere 50 bis 65. Neben den Alkoholen a) und b) können noch weitere aliphatische aromatische oder cycloaromatische Alkohole oder auch Amine zur Reaktion eingesetzt werden. Bevorzugt werden Cyclohexanol, Phenylethanol, Dimethylaminopropylamin sowie primäre Amine mit 6 bis 34 C-Atomen. Die daraus erhaltenen Struktureinheiten können 0 bis 20, inbesondere 0 bis 10 Gew.-%, im Endprodukt ausmachen.

Das angestrebte Molekulargewicht kann auf verschiedene Weise erhalten werden, z.B. durch eine hohe Initiator-Konzentration oder durch Zusatz eines Reglers, falls nicht eine Monomer-Komponente ohnehin als Regler wirkt. Als Regler kommen insbesondere Mercapto-Verbindungen in Frage. Darüber hinaus sind auch folgende Verbindungen möglich CCl₄, CBr₄ und CBr₂Cl₂. Je nach Wirksamkeit sollten sie einen Gewichtsanteil von 0,2 bis 5 Gew.-%, bezogen auf die Monomeren haben.

Die erfindungsgemäßen Polyacrylate können auf verschiedene Weise hergestellt werden. Das bevorzugte Verfahren (A) ist gekennzeichnet durch
I) Herstellung des Alkohols b) aus dem Anhydrid und dem Alkanolamin,
II) Polymerisation in Gegenwart des Alkohols b) und
III)polymer-analoge Umsetzung der Alkohole a) und b) sowie gegebenenfalls weiterer Alkohole und Amine.
Das weitere zweckmäßige Verfahren (B) ist durch folgende Stufen gekennzeichnet:
I) Polymerisation in Abwesenheit des Alkohols b) aber in Gegenwart eines Reglers,
II) Herstellung des Alkohols b) im Polymerisationsgemisch aus dem Anhydrid und dem Alkanolamin und
III)polymer-analoge Umsetzung der Alkohole a) und b) sowie gegebenenfalls weiterer Alkohole und Amine.

Die Herstellung der Alkoholkomponente b) erfolgt zweckmäßigerweise aus den entsprechenden Anhydriden und Alkohol-Aminen unter azeotroper Entfernung des Wassers in dazu geeigneten Lösungsmitteln wie Toluol oder Xylol. Ein Katalysator ist nicht erforderlich. Die Umsetzung ist quantitativ.

Die Polymerisation erfolgt unter den üblichen Bedingungen der radikalischen Polymerisation bei Temperaturen zwischen 60 und 140 °C mit den üblichen Azo- oder Peroxidstartern, z.B. Azo-bisiso-butyronitril, Dibenzoylperoxid, Dilauroylperoxid in Gegenwart eines inerten Lösungsmittels, z.B. Toluol, Xylol oder N-Methylpyrrolidon.
Die polymer-analoge Umsetzung wird im allgemeinen bei Temperaturen von 140 bis 220 °C durchgeführt. Die Temperatur hängt natürlich von den Katalysatoren ab. Als Katalysatoren kommen z.B. in Frage: Natriumalkoholat, insbesondere Methylat, Zinn, zinnorganische Verbindungen, p-Toluolsulfonsäure, Tetraisopropyltitanat, Schwefelsäure, Kaliumcarbonat und Lithiumhydroxid. Die wirksamsten Katalysatoren sind die zinnorganischen Verbindungen.

Die so hergestellten erfindungsgemäßen Polyacrylate eignen sich als Verlaufmittel für Pulverbeschichtungen, insbesondere Pulverlacke. Insbesondere können die erfindungsgemäßen Polyacrylate mit weiteren Feststoffen, insbesondere mit gehärtetem Rizinusöl und seinen Derivaten trocken gemischt werden. Das Mischungsverhältnis von Polyacrylat : Rizinusöl bzw. seinen Derivaten beträgt im allgemeinen 3 bis 1 zu 1, vorzugsweise 1 bis 2 : 1.
Die Erfindung betrifft weiterhin Pulverlacke. Sie enthalten thermoplastische oder duromere Kunstharze und 0,1 bis 2,0 Gew.-%, bevorzugt 0,5 bis 1 Gew.-% - bezogen auf das Gesamtgewicht der Pulverlacke - eines oder mehrerer der erfindungsgemäßen Polyacrylate sowie gegebenenfalls übliche Additive wie Härtungsmittel, Härtungsbeschleuniger, Pigmente und UV-Stabilisatoren. Besonders bevorzugt sind Pulverlacke auf Basis von Epoxiden für die Vernetzung mit carboxylfunktionellen Polyestern (sogenannte Hybridsysteme) sowie von carboxylfunktionellen Polyestern für die Vernetzung mit Triglycidylisocyanuraten.

Die Vorteile der neuen Polyacrylate liegen im wesentlichen in der leichten Verarbeitbarkeit zu Pulverlacken (z.B. beim Trockenmischen und Dosieren), in der höheren Lagerstabilität (z.B. kein Zusammenbacken und) und in dem besseren Verlauf-Verhalten (z.B. nicht nur Vermeidung von "Fischaugen", "Kratern" und "Nadellöchern", sondern auch deutliche Verringerung des Orangen-Schaleneffektes und damit eine bessere Glanzausbildung).
Die erfindungsgemäßen Polyacrylate gestatten die Herstellung völlig schleierfreier Klarlackfilme. Die Polyacrylate sind grob-kristalline Pulver von weiß bis hellbrauner Farbe. Sie sind gut mit anderen Additiven verträglich, insbesondere mit gehärtetem Rizinus-Öl und seinen Derivaten.

Die Erfindung wird nun anhand von bevorzugten Ausführungsbeispielen näher erläutert.

Die Produkte wurden folgendermaßen charakterisiert:
1. Der Schmelzbereich wurde mit einer Kofler-Heizbank bestimmt.
2. Das Molekulargewicht wurde mittels GPC relativ zu Polystyrol-Standards bestimmt.
3. Die spezifische Viskosität wurde in einer 5 %igen Toluol-Lösung bei 20 °C bestimmt.
4. Die OH-Zahl wurde nach DIN 53240 bestimmt.
5. Der Glanz wurde nach DIN 67530 bestimmt.

### Allgemeine Herstellungsvorschrift (B) für die Beispiele A-F der Tab. 1

Ca. 10 % der Monomere werden mit dem Regler vermischt und in Toluol gelöst. Ca. 20 % des Starters werden zugegeben und das Gemisch auf etwa 85 °C erwärmt. Nach dem Anspringen der Polymerisation werden innerhalb von 2 h die restliche Monomer- und Startermenge zudosiert. Nach Ende der Zugabe wird noch 1 h bei 90 °C polymerisiert. Zur Herstellung des Imids wird bei 90 °C das Anhydrid zugegeben und anschließend das Alkanolamin langsam zugetropft. Es wird so lange am Wasserabscheider zum Rückfluß erhitzt, bis die theoretische Wassermenge entfernt ist.
Zur polymer-analogen Umsetzung wird die 100 °C warme Lösung mit den langkettigen Alkoholen sowie ggf. weiteren Alkoholen versetzt. Nach Zugabe des Katalysators wird die Temperatur auf 140 - 220 °C erhöht und Toluol sowie der entstehende niedere Alkohol abdestilliert. Zur Vervollständigung wird gegen Ende der Reaktion auf ca. 30 mm Hg (≏ 40 mbar) evakuiert.

### Allgemeine Herstellungsweise (A) für die Beispiele G-L der Tab. 2

Zur Herstellung des Imids wird das Anhydrid in Toluol gelöst und die Mischung zum Rückfluß erhitzt. Das Alkanolamin wird langsam zugetropft. Das entstehende Reaktionswasser wird am Wasserabscheider vollständig entfernt.
Zur Polymerisation wird die Lösung auf 85 °C abgekühlt und mit 10 % der Monomere sowie 20 % des Starters versetzt. Nach Beginn der Polymerisation werden die restlichen Monomere sowie der restliche Starter innerhalb von 2 h zudosiert. Anschließend wird noch 1 h bei 90 °C nachpolymerisiert.
Zur polymer-analogen Umsetzung wird die auf 110 °C erhitzt Reaktionsmischung mit den langkettigen Alkoholen sowie ggf. weiteren Alkoholen versetzt. Die Temperatur wird auf 140 - 220 °C erhöht, wobei Toluol und der entstehende niedere Alkohol abdestillieren. Zur Vervollständigung der Umsetzung wird gegen Ende der Reaktion auf ca. 30 mm Hg (≙ 40 mbar) evakuiert.

Entsprechend den allgemeinen Herstellungsvorschriften A und B wurden Verlaufmittel hergestellt, wobei Monomere, Regler, Starter, Alkohole bzw. Amine gemäß Tab. 1 und 2 eingesetzt wurden. Es wurden niedermolekulare Polyacrylate mit einer spezifischen Viskosität von 0,34 bis 1,38 und einem Schmelzpunkt (Schmp.) im Bereich von 38 bis 52 °C erhalten.

Das Polyacrylat gemäß Beispiel H sowie gemäß Beispiel C war hellbis mittelbraun und hart. Es hatte eine OH-Zahl von < 20 mg KOH/g.

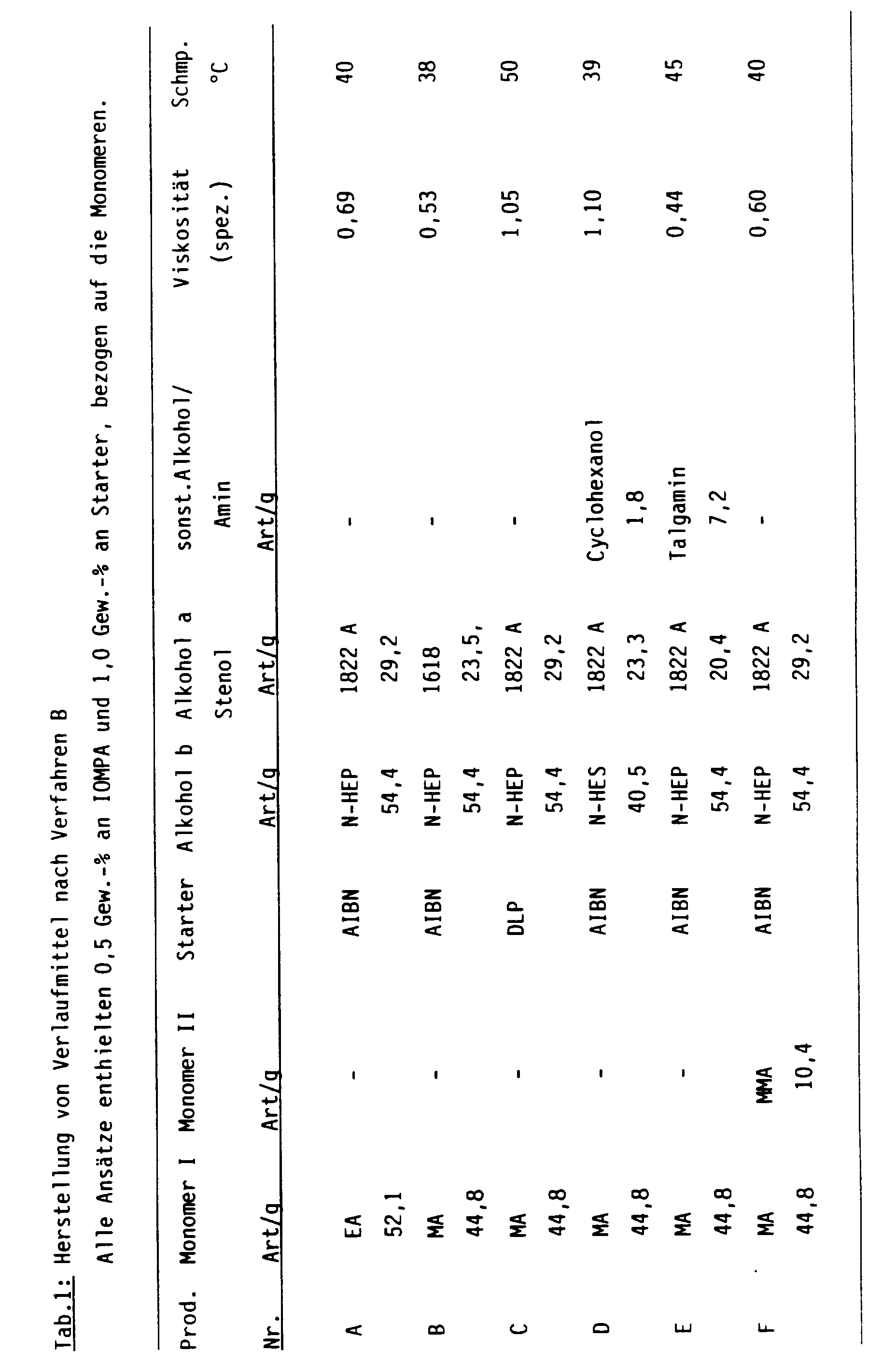

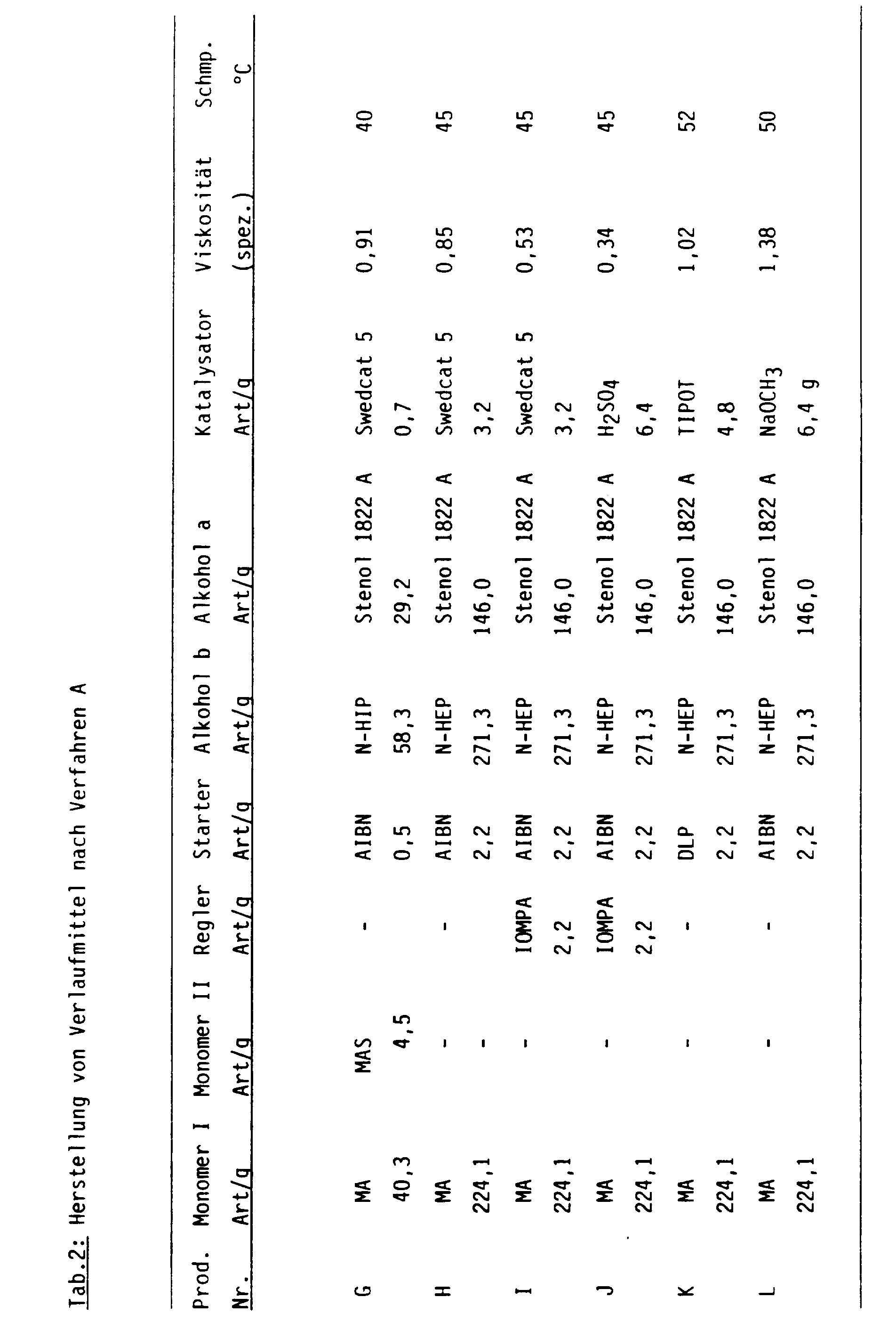

### Verwendete Abkürzungen

- EA:: Ethylacrylat
- MA:: Methylacrylat
- MMA:: Methylmethacrylat
- MAS:: Methacrylsäure
- N-HEP:: N-(2-Hydroxyethyl-)phthalimid
- N-HES:: N-(2-Hydroxyethyl-)succinimid
- N-HIP:: N-(2-Hydroxyisopropyl-)phthalimid
- AIBN:: Azobisisobutyronitril
- DLP:: Dilauroylperoxid
- IOMPA:: Mercaptopropionsäureisooctylester
- Stenol 1822 A (Fa. Henkel):: Fettalkoholschnitt mit ca. 70 % C₂₂-Anteil
- Stenol 1618 (Fa. Henkel):: Fettalkoholschnitt, hauptsächlich C₁₆/C₁₈-Anteile
- TIPOT:: Tetraisopropyltitanat
Swedcat 5 (Fa. Swedstab) zinnorganischer Katalysator.

Zur Prüfung der Eignung der erfindungsgemäß einzusetzenden Copolymeren als Verlaufmittel wurden diese in folgenden Pulverlacksystemen getestet.

### I Epoxid-Lack

Eine Pulverlackzusammensetzung aus 50 Gew.-Teilen eines Epoxidharzes I, 50 Gew.-Teilen eines Polyesterharzes II und 0,5 Gew.-Teilen Benzoin wurde unter Zusatz von 1 Gew.-Teil des zu prüfenden Verlaufmittels vermischt; die Mischung wurde anschließend extrudiert, granuliert, vermahlen und gesiebt. Die erhaltenen Pulverlacke wurden elektrostatisch auf eine Metalloberfläche gebracht und 12 min bei 180 °C eingebrannt. Das eingesetzte Epoxidharz war ein handelsübliches Produkt auf Basis von Bisphenol A und Epichlorhydrin. Das eingesetzte ölfreie Polyester-Harz war ebenfalls ein handelsübliches Produkt mit freien Carboxylgruppen. Die Harze hatten folgende Kenndaten:

| | I | II |
|---|---|---|
| Epoxid-Äquivalentgewicht | 715-835 | |
| Glasumwandlungstemperatur °C | - | 43-48 |
| Erweichungsbereich (Kofler) °C | 70-80 | 70-80 |
| Säurezahl (DIN 53402) | - | 60-80 |
| Schmelzviskosität Pa·s | | |
| (DIN 53229/160 °C/Kegelplatte) | - | 8-16 |
| (DIN 53735/120 °C/21,2 N | ca.50 | - |

### II Polyester Lack

Analog zu der unter I beschriebenen Weise wurde aus 55,3 Gew.-Teilen eines Polyesterharzes mit freien Carboxylgruppen und 4,2 Gew.-Teilen Triglycidylisocyanurat unter Zusatz von 1 Gew.-Teil Verlaufmittel an Pulverlack hergestellt und auf eine Metalloberfläche appliziert. Das Polyesterharz wies die folgenden Kenndaten auf:

| | |
|---|---|
| Erweichungspunkt (Kofler) | 77-87 °C |
| Glasumwandlungstemperatur | 55-60 °C |
| Schmelzviskosität DIN 53229, 160 °C, Kegelplatte | 30-60 Pa·s |
| Säurezahl DIN 53402 | 30-36 mg KOH/g |

Die Einbrennbedingungen waren 5 min bei 200 °C, 8 min bei 180 °C oder 17 min bei 165 °C (die angegebenen Temperaturen beziehen sich jeweils auf die Objekttemperatur).

Die Verlaufmittel gemäß den Beispielen H und C lieβen sich einwandfrei verarbeiten. Sie blieben rieselfähig.

Die erhaltenen Klarlacke zeigten sichtbar keinerlei Trübung, selbst bei Schichtdicken von > 100 µm.

Sie zeigten einen sehr guten Verlauf ohne "Fischaugen" oder "Krater". Der Orangen-Schalen-Effekt war nur noch im geringen Ausmaß zu sehen. Die Glanz-Messung ergab Werte von 71, 92 und 97 % für 20, 60 und 85 ° im Falle von Verlaufmittel gemäß Beispiel H im Expoxid-Lack und Werte von 72, 92 und 97 im Polyesterlack.

Das Verlaufmittel gemäß Beispiel C ergab im Epoxid-Lack Werte von 68, 96 und 93 sowie 77, 90 und 96 im Polyester-Lack.

Der zum Vergleich durchgeführte Versuch mit einem Verlaufmittel nach Beispiel 1 der EP 356 676 ergab Glanzwerte von 53 % bei 20 ° im Epoxid-Lack und 64 % bei 20 ° im Polyester-Lack.
Daraus ergibt sich, daß die Handhabung und die Verlaufseigenschaften durch die Veränderung der Herstellung (Polymerisation und polymer-analoge Umsetzung einerseits und Copolymerisation andererseits) und die Veränderung der Struktur-Einheiten des Polyacrylats (zusätzliche freie Säure oder Ester mit einem C₁-C₄-Alkohol) wesentlich verbessert wurde.

## Patentansprüche

1. Polyacrylat, herstellbar durch
- Polymerisation von wenigstens einem der folgenden Monomeren: Acrylsäure, Methacrylsäure, Crotonsäure, Itaconsäure, Fumarsäure, Maleinsäure und deren Ester mit C₁- bis C₄-Alkoholen sowie Maleinsäure-Anhydrid,
- polymer-analoge Umsetzung des erhaltenen Polymerisats mit den Alkoholen a) und b),
wobei der Alkohol a) ein aliphatischer geradkettiger oder verzweigter Alkohol mit 6 bis 36 C-Atomen oder ein Alkoholgemisch daraus ist, und
wobei der Alkohol b) ein Alkohol mit einer Imidstruktur der folgenden allgemeinen Formel ist: 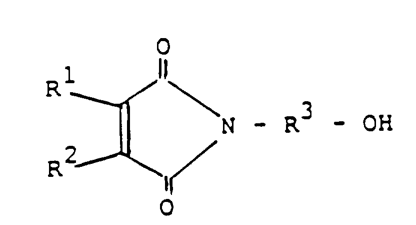
- in der R¹ und R unabhängig voneinander Wasserstoff oder eine Alkylgruppe mit 1 bis 4 C-Atomen bedeuten oder zusammen einen C₅- oder C₆-Ring bilden können.
- R³ für eine geradkettige oder verzweigte Alkylengruppe mit 1 bis 6 Kohlenstoffatomen oder für eine cyclische C₅oder C₆-Alkylgruppe steht und
- die C-C-Doppelbindung hydriert sein kann,
wobei nur etwa 70 Mol% der funktionellen Gruppen bei der polymer-analogen Umesterung reagieren.

2. Polyacrylat nach Anspruch 1, gekennzeichnet durch 0 bis 30, vorzugsweise 0 bis 10 Gew.-% eines zusätzlichen Comonomeren, insbesondere Ethylen, Styrol oder Acrylnitril.

3. Polyacrylat nach Anspruch 1, gekennzeichnet durch wenigstens eines der Monomeren: Maleinsäureanhydrid, Acrylsäure- und Methacrylsäure-Ester, insbesondere Acrylsäure-Methylester und -Ethylester.

4. Polyacrylat nach Anspruch 1, gekennzeichnet durch einen Gewichtsanteil des aus dem Alkohol a) gebildeten Esters von 15 bis 45, vorzugsweise 20 bis 40 und insbesondere 25 bis 35 Gew.-% im Endprodukt.

5. Polyacrylat nach Anspruch 1, gekennzeichnet durch einen Gewichtsanteil des aus dem Alkohol b) gebildeten Esters von 30 bis 70, vorzugsweise 40 bis 65 und insbesondere von 50 bis 65 Gew.-% im Endprodukt.

6. Polyacrylat nach Anspruch 1, dadurch gekennzeichnet, daß neben den Alkoholen a) und b) auch noch aliphatische, aromatische oder cycloaromatische Alkohole oder Amine an der polymer-analogen Reaktion teilnehmen, insbesondere Cyclohexanol, Phenylethanol, Dimethylaminopropylamin sowie primäre Amine mit 6 bis 34 C-Atomen, wobei die aus den zusätzlichen Alkoholen oder Aminen gebildeten Ester- und Amid-Struktureinheiten 0 bis 20, vorzugsweise 0 bis 10 Gew.-% des Endproduktes ausmachen können.

7. Polyacrylat nach Anspruch 1, dadurch gekennzeichnet, daß dem Polymerisationsansatz 0,2 bis 5 Gew.-% eines Reglers zugesetzt werden, insbesondere Mercapto-Verbindungen.

8. Verfahren zur Herstellung des Polyacrylates nach mindestens einem der Ansprüche 1 bis 7, gekennzeichnet durch
I) Herstellung des Alkohols b) aus dem Anhydrid und dem Alkanolamin,
II) Polymerisation in Gegenwart des Alkohols b) und
III) polymer-analoge Umsetzung der Alkohole a) und b) sowie gegebenenfalls weiterer Alkohole und Amine.

9. Verfahren zur Herstellung des Polyacrylates nach mindestens einem der Ansprüche 1 bis 7, gekennzeichnet durch
I) Polymerisation in Abwesenheit des Alkohols b) aber in Gegenwart eines Reglers,
II) Herstellung des Alkohols b) im Polymerisationsgemisch aus dem Anhydrid und dem Alkanolamin und
III) polymer-analoge Umsetzung mit der Alkohole a) und b) sowie gegebenenfalls weitere Alkohole und Amine.

10. Verwendung des Polyacrylates nach mindestens einem der Ansprüche 1 bis 7 als Verlaufmittel für Pulverbeschichtungen, insbesondere Pulverlacke.

11. Verlaufmittel, dadurch gekennzeichnet, daß es als wesentliche Komponente ein Polyacrylat nach mindestens einem der Ansprüche 1 bis 7 enthält.

12. Pulverlack mit dem Polyacrylat nach mindestens einem der Ansprüche 1 bis 7.

## Claims

1. Polyacrylate obtainable by
- polymerization of at least one of the following monomers: acrylic acid, methacrylic acid, crotonic acid, itaconic acid, fumaric acid, maleic acid and esters thereof with C₁₋₄ alcohols and maleic anhydride,
- polymer-analog reaction of the polymer obtained with alcohols a) and b), alcohol a) being an aliphatic linear or branched C₆₋₃₆ alcohol or a mixture of such alcohols and alcohol b) being an alcohol with an imide structure corresponding to the following general formula: 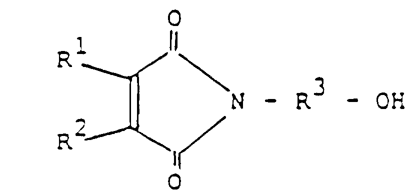
- in which R¹ and R independently of one another represent hydrogen or a C₁₋₄ alkyl group or together may form a C₅ or C₆ ring,
- R³ is a linear or branched alkylene group containing 1 to 6 carbon atoms or a cyclic C₅ or C₆ alkyl group and
- the C-C double bond may be hydrogenated,
only about 70 mole-% of the functional groups reacting in the polymer-analog transesterification.

2. A polyacrylate as claimed in claim 1, characterized by 0 to 30% by weight and preferably 0 to 10% by weight of an additional comonomer, more particularly ethylene, styrene or acrylonitrile.

3. A polyacrylate as claimed in claim 1, characterized by at least one of the following monomers: maleic anhydride, acrylic acid and methacrylic acid esters, more particularly methyl and ethyl acrylate.

4. A polyacrylate as claimed in claim 1, characterized by a percentage by weight of the ester formed from alcohol a) of 15 to 45, preferably 20 to 40 and more preferably 25 to 35% by weight in the end product.

5. A polyacrylate as claimed in claim 1, characterized by a percentage by weight of the ester formed from alcohol b) of 30 to 70, preferably 40 to 65 and more preferably 50 to 65% by weight in the end product.

6. A polyacrylate as claimed in claim 1, characterized in that, in addition to alcohols a) and b), aliphatic, aromatic or cycloaromatic alcohols or amines take part in the polymer-analog reaction, more particularly cyclohexanol, phenylethanol, dimethyl aminopropylamine and primary amines containing 6 to 34 carbon atoms, the ester and amide structural units formed from the additional alcohols or amines making up from 0 to 20% by weight and preferably from 0 to 10% by weight of the end product.

7. A polyacrylate as claimed in claim 1, characterized in that from 0.2 to 5% by weight of a regulator, more particularly a mercapto compound, is added to the polymerization mixture.

8. A process for the production of the polyacrylate claimed in at least one of claims 1 to 7, characterized by
I) preparation of the alcohol b) from the anhydride and the alkanolamine,
II) polymerization in the presence of the alcohol b) and
III) polymer-analog reaction of alcohols a) and b) and optionally other alcohols and amines.

9. A process for the production of the polyacrylate claimed in at least one of claims 1 to 7, characterized by
I) polymerization in the absence of alcohol b), but in the presence of a regulator,
II) preparation of alcohol b) in the polymerization mixture from the anhydride and the alkanolamine and
III) polymer-analog reaction of alcohols a) and b) and optionally other alcohols and amines.

10. The use of the polyacrylate claimed in at least one of claims 1 to 7 as flow control agents for powder coatings, more particularly for powdered lacquers.

11. A flow control agent, characterized in that it contains a polyacrylate according to at least one of claims 1 to 7 as an essential component.

12. A powdered lacquer containing the polyacrylate claimed in at least one of claims 1 to 7.

## Revendications

1. Polyacrylate fabricable par
- polymérisation d'au moins un des monomères suivants: acide acrylique, acide méthacrylique, acide crotonique, acide itaconique, acide fumarique, acide maléique et leurs esters avec des alcools en C₁ à C₄, ainsi qu'avec l'anhydride maléique.
- transformation en polymère analogue (c'est-à-dire en polymère apparenté) du polymère obtenu, à l'aide des alcools a) et b),
l'alcool a) étant un alcool aliphatique à chaîne droite ou ramifiée comportant 6 à 36 atomes de C ou un mélange d'alcools de ce type, et
l'alcool b) étant un alcool à structure imidique de la formule générale suivante: 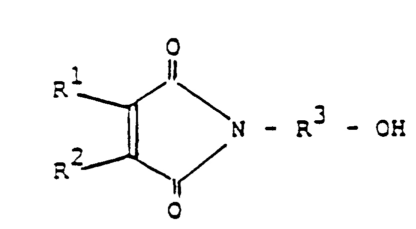
- dans laquelle R¹ et R peuvent représenter indépendamment l'un de l'autre l'hydrogène ou un groupe alkyle comportant 1 à 4 atomes de C ou former ensemble un noyau C₅ ou C₆.
- R³ correspond à un groupe alkylène à chaîne droite ou ramifiée comportant 1 à 6 atomes de carbone ou à un groupe alkyle en C₅ ou C₆ cyclique et
- la double liaison C-C peut être hydrogénée, seulement environ 70 moles % des groupes fonctionnels réagissant lors de la transestérification en polymère analogue.

2. Polyacrylate selon la revendication 1, caractérisé par 0 à 30, de préférence 0 à 10 % en poids d'un comonomère supplémentaire, en particulier l'éthylène, le styrène ou l'acrylonitrile.

3. Polyacrylate selon la revendication 1, caractérisé par au moins un des monomères suivants: anhydride maléique, ester de l'acide acrylique et méthacrylique, en particulier ester méthylique et ester éthylique de l'acide acrylique.

4. Polyacrylate selon la revendication 1, caractérisé par une proportion en poids de l'ester formé à partir de l'alcool a) de 15 à 45, de préférence de 20 à 40 et, en particulier, de 25 à 35 % en poids dans le produit final.

5. Polyacrylate selon la revendication 1, caractérisé par une proportion en poids de l'ester formé à partir de l'alcool b) de 30 à 70, de préférence de 40 à 65 et, en particulier, de 50 à 65 % en poids dans le produit final.

6. Polyacrylate selon la revendication 1, caractérisé en ce qu'en plus des alcools a) et b), des alcools ou des amines aliphatiques, aromatiques ou cycloaromatiques participent également à la transformation en polymère analogue, en particulier le cyclohexanol, le phényléthanol, la diméthylaminopropylamine ainsi que des amines primaires comportant 6 à 34 atomes de C, les unités structurelles d'ester et d'amide formées à partir des alcools ou amines supplémentaires représentant 0 à 20, de préférence 0 à 10 % en poids du produit final.

7. Polyacrylate selon la revendication 1, caractérisé en ce que l'on ajoute à la préparation de polymérisation 0,2 à 5 % en poids d'un régulateur, en particulier des composés mercapto.

8. Procédé de fabrication du polyacrylate selon au moins une des revendications 1 à 7, caractérisé par les étapes suivantes:
I) fabrication de l'alcool b) à partir de l'anhydride et de l'alcanolamine,
II) polymérisation en présence de l'alcool b) et
III) réaction des alcools a) et b) ainsi que, le cas échéant, d'autres alcools et amines, pour obtenir un polymère analogue.

9. Procédé de fabrication du polyacrylate selon au moins une des revendications 1 à 7, caractérisé par les étapes suivantes:
I) polymérisation en l'absence de l'alcool b), mais en présence d'un régulateur,
II) fabrication de l'alcool b) dans le mélange de polymérisation constitué de l'anhydride et de l'alcanolamine et
III) réaction des alcools a) et b) ainsi que, le cas échéant, d'autres alcools et amines, pour obtenir un polymère analogue.

10. Utilisation du polyacrylate selon au moins une des revendications 1 à 7, comme produit nivelant pour les revêtements par poudres, en particulier les peintures, laques ou vernis en poudre.

11. Produit nivelant caractérisé en ce qu'il renferme comme composant essentiel un polyacrylate selon au moins une des revendications 1 à 7.

12. Peinture, laque ou vernis en poudre avec le polyacrylate selon au moins une des revendications 1 à 7.
